# EUROPEAN PATENT SPECIFICATION

(11) **EP 1 905 660 B1**
(45) Date of publication and mention of the grant of the patent: **25.05.2011**
(21) Application number: 07116934.6
(22) Date of filing: 21.09.2007
(51) Int. Cl.: B60R 22/195

(54) **Gaiter**
Faltbalg
Pommeau

(30) Priority: 28.09.2006 GB 0619127
(43) Date of publication of application: 02.04.2008
(73) Proprietor: Nissan Motor Manufacturing (UK) Ltd., Cranfield Bedfordshire MK43 0DB (GB)
(72) Inventor: Gooch, James, Cranfield, Bedfordshire MK43 0DB (GB)
(74) Representative: Hufton, Victoria Alice

(56) References cited:
- EP-A- 0 803 399
- EP-A- 1 253 357
- EP-A- 1 266 808
- DE-A1- 10 341 891
- GB-A- 2 313 037
- US-A- 5 725 249
- US-A1- 2004 212 188

## Description

The present invention relates to a gaiter and more particularly a gaiter for use in a pyrotechnic lap pre-tensioner.

In the automotive industry it is well-known to restrain all occupants of a vehicle using seat-belts. During a crash, the belt is typically locked and/or tightened in order to prevent the occupant from moving unduly, relative to the vehicle. The tightening of the belt is typically achieved by the use of a pre-tensioner.

EP-A-0 803 399 discloses a vehicle seat with a belt tensioner. The seatbelt buckle is attached to the vehicle via a tensioning cable. The distal end of the tensioning cable is connected to a tensioning piston held within a curved tubular guide. The curved guide tube gaiter is secured to the vehicle seat frame providing an integrated system. To tension the seatbelt during a vehicle impact the piston is forced down along the curved tubular guide by means of a pyrotechnic charge gas generator.

The guide tube is open at the end below the seatbelt buckle at the side of the seat and curves downwards to a closed termination point underneath the seat base. This configuration has the disadvantage that there is nothing to prevent the ingress of matter into the guide and, in addition, the tensioning cable is not covered. Over time the ingress of particulate matter may adversely affect the dynamic performance of the belt tensioner in the event of a deployment. Additionally, exposed cables are not considered to be aesthetically acceptable to the vehicle designer or customer in the otherwise trimmed and upholstered environment of the vehicle interior.

GB-A-2 313 037 discloses a seatbelt tensioner device, designed to be secured to the side of the vehicle seat frame via mounting means that are integral with the guide tube. The seatbelt tensioner device comprises a seatbelt buckle, a tensioning cable, a tensioning piston, a guide tube gaiter and pyrotechnic gas generator housed with the tensioning piston within the guide tube. The seatbelt buckle is connected to the vehicle via the tensioning cable the distal end of which is connected to the tensioning piston within the guide tube. To tension the seatbelt the piston is forced down along a guide tube by means of the pyrotechnic charge in the gas generator.

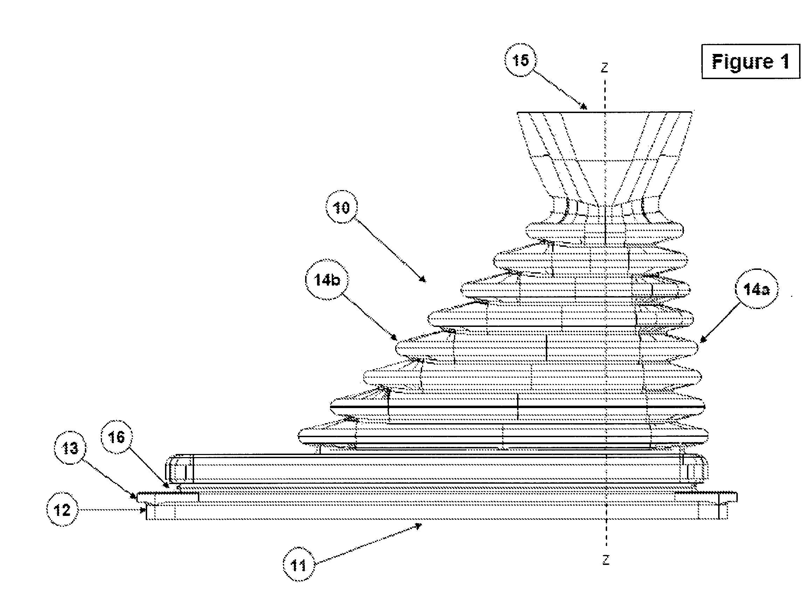

The guide tube is open at the end below the seatbelt buckle and closed at its distal end from the buckle. In the example shown in Figure 1, the open end of the guide tube is connected to the lower edge of the seatbelt buckle by means of a convoluted plastic sleeve shaped so as to concertina during retraction. This type of convoluted plastic sleeve or gaiter, is intended to cover the tensioning cable and to prevent ingress of dirt and other particulate matter into the top of the guide tube.

However, the provision of the gaiter considerably reduces the total stroke of the retraction available from this device. For a cable of a given length the stroke of the device is reduced, in comparison with an uncovered cable as described above the reference to EP-A-0803399, to a maximum of approximately two thirds of the length of exposed tensioning cable between the open end of the guide tube and the lower edge of the buckle. The limitation of retraction stroke is caused by the concatenated stack-up of components between the buckle housing and the guide tube during deployment of the device.

EP-A-1 266 808 discloses a seatbelt tensioner device with an integral shock absorbing member. The seatbelt tensioner is designed to be secured to the side of the vehicle seat frame via mounting means integral with the guide tube. The seatbelt tensioner device comprises a seatbelt buckle, a tensioning cable passed through a shock absorbing member housed within a compressible cover, a tensioning piston, a guide tube (gaiter) and pyrotechnic gas generator housed with the tensioning piston within the guide tube. The seatbelt buckle is connected to the tensioning cable via a pulley within the buckle. The tensioning cable is connected at one end to the tensioning piston within the guide tube, and to the other end to a securing point below the buckle. To tension the seatbelt the piston is forced down along a guide tube by means of the pyrotechnic charge in the gas generator. The guide tube is open at the end below the seatbelt buckle and closed at its distal end from the buckle. In the example shown in Figures 1 to 3, 6a and 6b, the open end of the guide tube is connected to the lower edge of the seatbelt buckle by means of a cover. The cover is a compressible sleeve shaped so as to concertina during retraction. This type of cover, is intended to shroud the tensioning cable and to prevent ingress of dirt into the top of the guide tube.

The overall height of the cover, at maximum compression, matches the height of the shock absorber member housed within it. In this design the maximum available stroke is limited by the matched compressed height of the cover and shock absorber member.

EP-A-1 253 357 discloses a seatbelt tensioner device with a boot intended to maximise the amount of available contraction. The boot disclosed in EP-A-1 253 357 is configured in such a manner that the cross sections of convexities near the buckle are larger than the convexities adjacent to the buckle supporting member. As the buckle is pulled with relatively large force by a wire, the buckle moves toward the buckle supporting member so that the boot contracts in the longitudinal direction. At this point, the convexities of the flexible portion are piled on each other in a direction perpendicular to the contracting direction.

The overall height of the boot, at maximum compression, is at least equal to the height of the largest convexity of the boot. In this design the maximum available stroke is limited by the piling of each convexity on top of each other. After the tensioner is deployed, the relatively large buckle will sit on top of the collapsed boot at that point the tensioner device cannot retract the buckle any further.

According to the present invention there is provided a gaiter for a buckle pre-tensioner, the gaiter comprising: a body portion configured to enable inversion of the gaiter during deployment of the buckle pre-tensioner; and means for engaging with the buckle pre-tensioner, in use.

The configuration of the body portion permits the buckle pre-tensioner to have a greater stroke length than would be possible with a standard, parallel-sided gaiter.

The body portion may have substantially non-parallel sides and/or may be tapered. The body portion may include a plurality of convolutions to enable inversion of the gaiter during deployment of the buckle pre-tensioner.

The convolutions of the body portion may be formed from a material that is sufficiently flexible to enable the inversion of the gaiter during deployment.

The body portion may have a leading edge and a trailing edge and the leading edge may have either a uniform taper or a curved profile. The curved profile may be concave.

The interfacing means may comprise a cup-shaped aperture. This aperture is advantageous because its shape aids assembly by taking up tolerances between the buckle and the vehicle body. The cup-shaped feature has the advantage that the load exerted by the buckle is evenly distributed around the inner surface of the aperture and therefore there are no additional interfacing means that act as to increase locally the stresses on the gaiter material.

The gaiter may be for use in a vehicle and the gaiter may further comprise means for securing the gaiter to the vehicle.

Furthermore, according to the present invention there is provided a vehicle comprising at least one buckle pre-tensioner and a gaiter as set out above.

The present invention will now be described in detail with reference to the accompanying drawings in which:
Figure 1 is a side view of a gaiter according to the present invention;
Figure 2 shows a rear perspective view of the gaiter of the present invention;
Figure 3 shows a front perspective view of the gaiter of the present invention;
Figure 4 shows a sectional side view of the gaiter of the present invention;
Figure 5 shows a sectional rear view of the gaiter of the present invention;
Figure 6 shows a side view of the gaiter of the present invention *in situ;*
Figure 7 shows a front perspective view of the gaiter of the present invention *in situ;*
Figure 8 shows a sectional rear view of the gaiter of the present invention *in situ;*
Figure 9 shows a sectional side view of the gaiter of the present invention;
Figure 10 shows a sectional side view of the present invention during deployment; and
Figure 11 shows a sectional side view of the present invention after deployment.

In Figures 1 to 5 the front of the vehicle is to the left of the Figure as shown. The gaiter 10 of the present invention is illustrated in Figures 1 to 5. The gaiter 10 comprises a body portion 14 terminating in a buckle-cup aperture 15 at one end and a body-seal aperture 11 at the other end. The body-seal aperture 11 is surrounded by a body-seal 12 and trim flange 13.

The main axis of compression in the embodiment shown in Figure 1 is defined by an axis joining the buckle-cup aperture 15 at the top of the gaiter with the body-seal aperture 11 at the bottom, shown by the line Z-Z. The body portion 14 of the gaiter 10 is asymmetric about this main axis of compression as is readily apparent from Figure 1. The body portion 14 of the gaiter 10 between the buckle-cup aperture 15 and the body-seal aperture 11 is elongate and is convoluted such that it is concertina-like in shape. In addition, each consecutive convolution has a smaller cross sectional area than the one below it. This configuration enables the buckle-cup aperture 15 to be drawn down through the body-seal aperture 11 at the bottom of the gaiter 10 during deployment of the buckle tensioner means. The body portion 14 of the gaiter 10 is thereby inverted, or turned inside-out. Using a gaiter that may be inverted during pre-tensioner deployment allows the pre-tensioner stroke to be maximised for a given packaging volume. The resultant pre-tensioner stroke is therefore considerably longer than the stroke length that would be attainable using a typical, parallel sided gaiter, as a parallel-sided gaiter would not permit the buckle to invert the gaiter during deployment. Typically, a standard parallel sided gaiter cannot be compressed along its axis of compression beyond two thirds of its uncompressed length, this feature can be a limiting factor in buckle pre-tensioner stroke length.

In the example shown in Figure 1, the gaiter 10 has a front or leading edge 14b and a rear or trailing edge 14a. In the example shown in the Figures, the leading edge 14b accounts for the majority of the difference in cross sectional area of the consecutive convolutions. In other examples, not illustrated, the tapering may be applied to all or any part of the circumference of the body portion of the gaiter so creating a structure that may, if sufficiently compressed, be caused to invert, either partially or completely as required.

Using a gaiter body portion with more than one non-parallel side will reduce the effort required to invert the gaiter body. In practice, the shape and form of the gaiter body will be selected to suit the packaging space and the inversion load available. It will be apparent to one skilled in the art, that a gaiter body portion mounted to a sufficiently rigid part of the vehicle other than the vehicle seat frame will need to flex in the direction of seat adjustment, from a relatively undeformed state when the vehicle seat is adjusted to its fully rearmost position to its point of fully deflection when the user has adjusted the seat to its fully forward adjustment position. The man skilled in the art would therefore understand that the extent and angle of the taper on the various sides of the body portion could be chosen to optimise the appearance and function of the gaiter depending on the mounting surface to which the buckle pre-tensioner is applied.

In the illustrated example, the trailing edge 14a is intended to move from an undeformed form to one deflected in one direction when the seat-belt buckle is in use, and the gaiter therefore benefits from having the side that must expand to stretch to the extent required.

The difference in cross-section between consecutive convolutions of the illustrated example is not uniform. In particular, the shape created by joining the leading edge 14b of each of the convolutions would be a concave curve. This configuration is intended to ensure that the gaiter can be fully inverted without impediment to the motion of the buckle pre-tensioner arising from the convolutions stacked up and resisting the motion of the buckle pre-tensioner.

Although the concave curve described and illustrated in Figure 1 is preferred, a straight line profile or convex curve for the leading edge 14b are also a viable alternatives.

The buckle-cup aperture 15, is shaped to receive the buckle assembly, not shown. In use, the buckle, not shown, fits securely within the buckle cup aperture 15. The sides of the aperture 15 form a seal around the buckle assembly. The interference fit seal provided is sufficient to prevent noise from the sill section travelling into the occupant compartment of the vehicle, and to prevent foreign bodies such as dust from migrating from the occupant compartment into the pre-tensioner mechanism. In the illustrated example, the buckle cup aperture 15, is substantially funnel shaped, to aid assembly and to help take up any tolerances between the buckle and the vehicle body.

The body seal aperture 11 is provided with a body seal 12 and a trim flange 13. The trim flange 13 serves to cover the plastic trim on which the gaiter 10 is mounted. The flange 13 is intended to take up any tolerance in fit between the gaiter 10 and the plastic trim 67.

The body seal 12 is a parallel sided feature extending from the lower edge of the gaiter 10. The body seal 12 may be more rigid than the convolutions of the body portion 14 so as to aid assembly to the vehicle by assisting the assembly personnel in pushing the gaiter body seat 12 through the carpet and/or plastic trim or finisher. The trim seal 16 is intended to form an attractive seal around the edge of a B pillar, sill or centre tunnel finisher or trim, and is intended to mask any build tolerances that may occur between vehicle body and interior trim, the design of the body seal feature will be specific to each vehicle to which this example is applied. The body seal 12 in conjunction with the trim flange 13 serves to seal the vehicle body aperture through which the buckle pre-tensioner protrudes, from the mounting of the pre-tensioner body below the surface of the floor or carpet or within or adjacent to the side sill, to the buckle assembly visible within the occupant compartment. A seal between the buckle pre-tensioner and the vehicle body is desirable so as to mitigate the intrusion of structure-borne noise from the vehicle body into the occupant compartment. The seal also acts to prevent ingress of foreign bodies such as dust from the occupant compartment into the pre-tensioner mechanism.

The gaiter 10 can be produced by injection molding, blow molding, or other suitable manufacturing methods associated with forming flexible-compressible parts from a suitable resilient elastic material such as rubber, TPE, PU, silicone, butyl rubber etc.

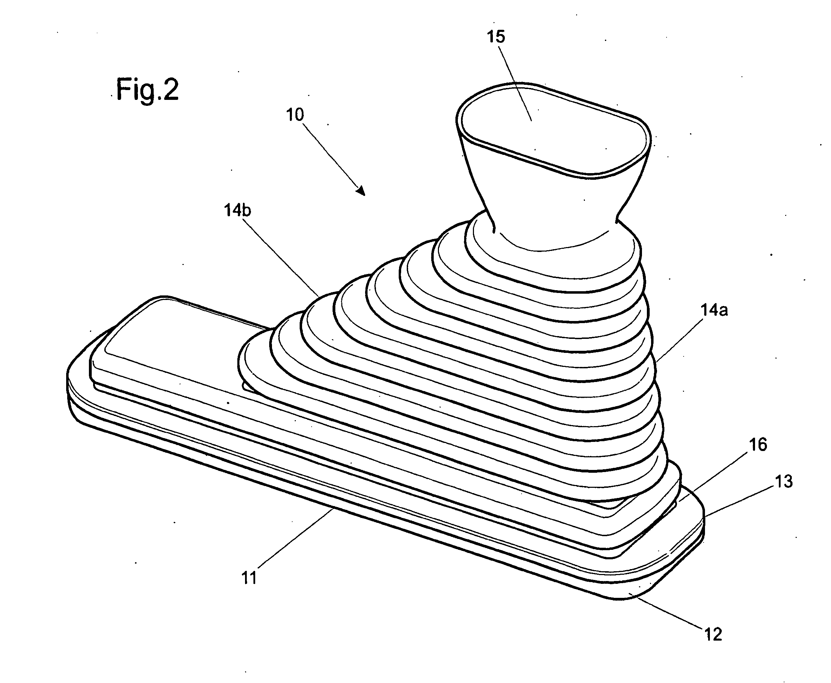

Figure 2 shows a rear perspective view of the gaiter of the present invention. The buckle cup aperture 15 may be seen in more detail in this Figure. The shape of the aperture 15 is dictated by the shape of the lower half of the corresponding buckle, not shown.

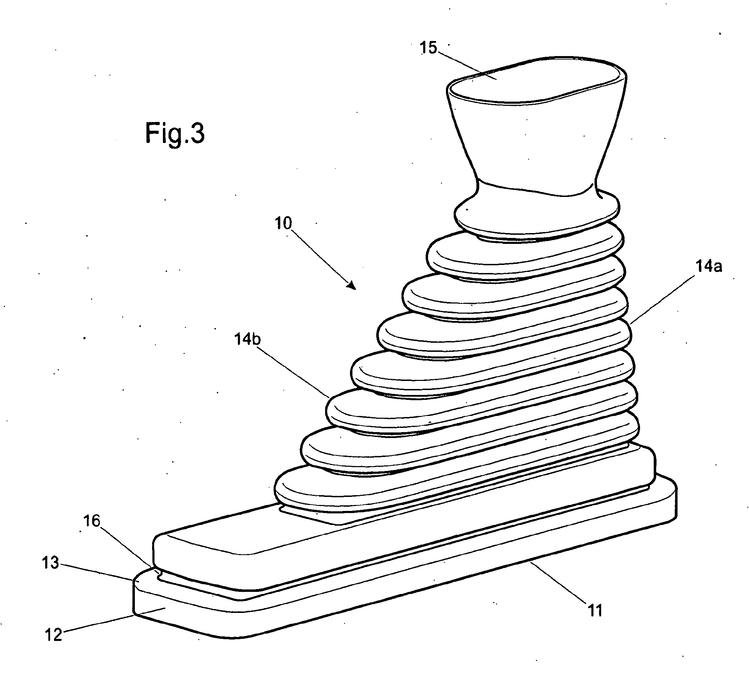

Figure 3 shows a front perspective view of the gaiter of the present invention. It will be apparent from Figure 3 that the leading edge of the gaiter body 14 slopes forward from the buckle cup down to the body seal 12.

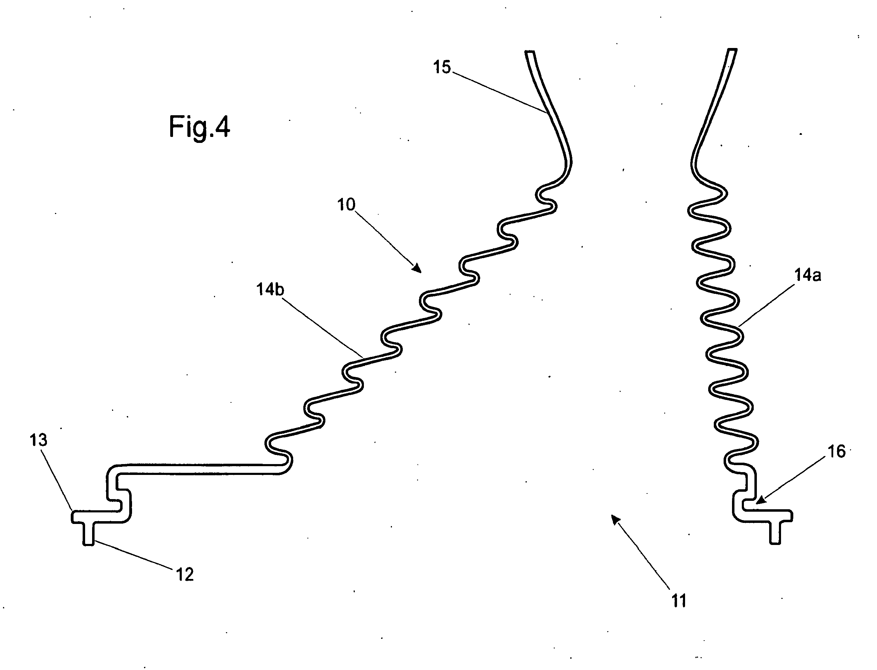

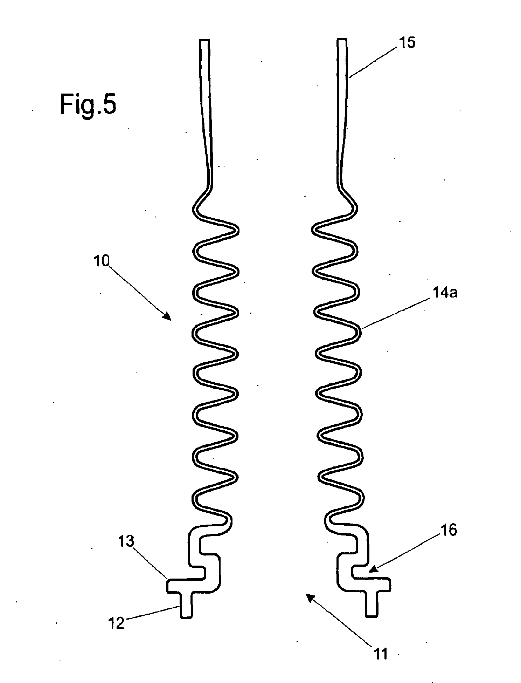

Figure 4 shows a sectional side view and Figure 5 shows a sectional rear view of the gaiter of the present invention. The convolutions of the gaiter body 14 are predominantly sinusoidal in nature in the example shown. However, it will be apparent to one skilled in the art that the profile of the convolutions may be adjusted to adapt to the requirements the material chosen for the gaiter body portion 14 and the manufacturing method used to produced the body portion. The form of the convolutions is not limited to that of a sinusoidal waveform and alternative embodiments may take the form of a triangular, saw-tooth or overlapping form if the material permits, but the skilled man would understand that some materials are not sufficiently resilient to tolerate the stress concentrations caused by the tight folds required by a saw-tooth cross section.

It may also be seen from Figures 4 and 5 that the thickness of the material of the body portion in the area of the body seal 12, trim flange 13 and trim seal 16 is greater than in the area of the convolutions. The extent of this thickening is often a function of the manufacturing method applied, but local additional vertical stiffness in the body/trim seal area ensures a better seal between the gaiter and the vehicle trim. A further advantage of this thickening is that it assists the assembly staff fit the gaiter without distorting and baulking during installation.

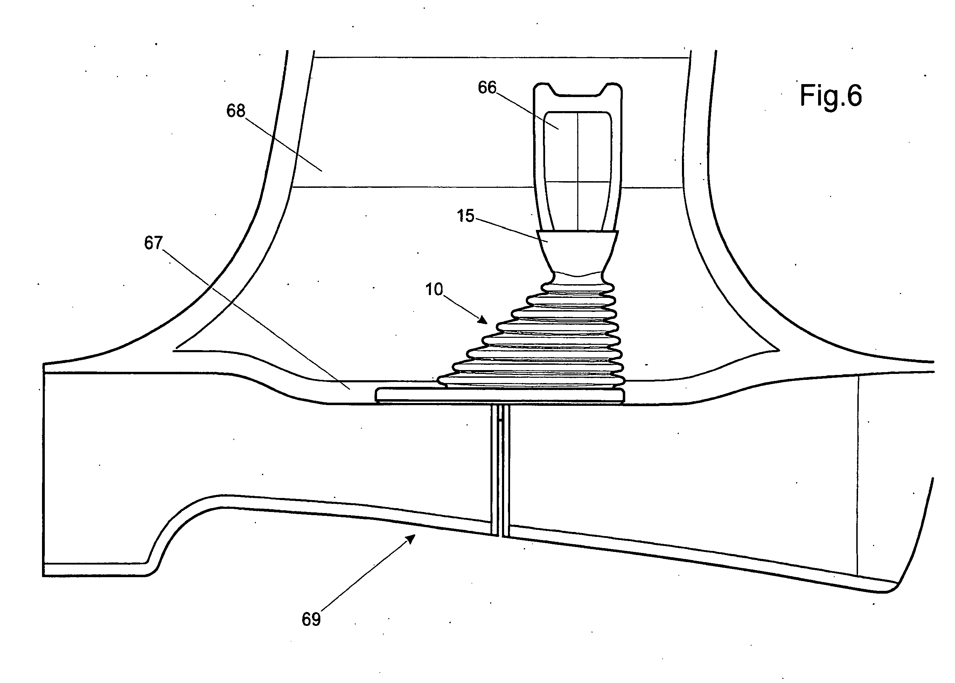

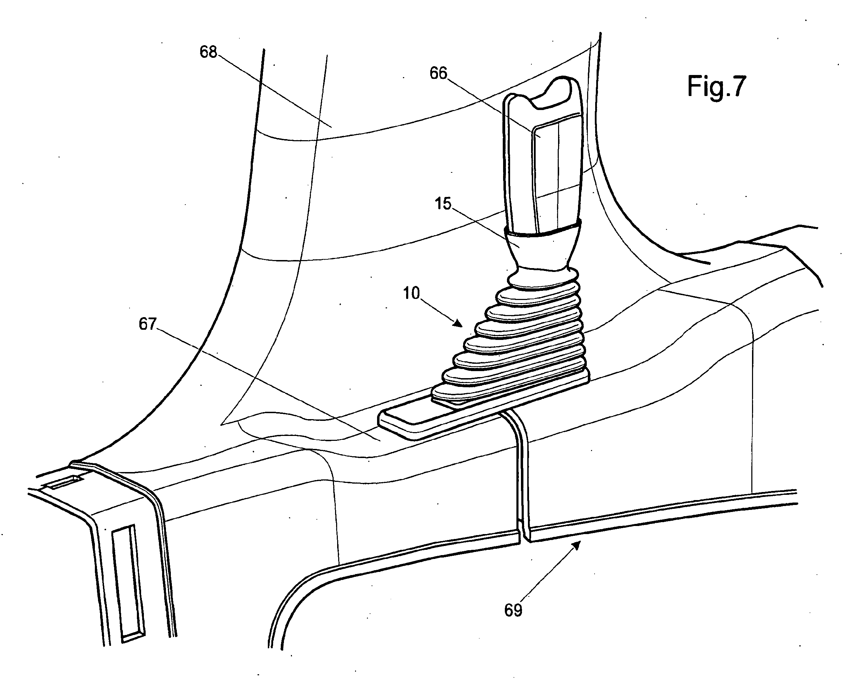

Figure 6 shows a side view of the present invention *in situ* and Figure 7 shows a front perspective view of the same. These Figures show the buckle assembly 66 located within the buckle cup aperture 15. In the example shown, the gaiter body 14 is located at the base of the B pillar. In further examples, not illustrated, the gaiter body may alternatively be located at the base of any vehicle body pillar adjacent to a seated occupant or the sill, the centre tunnel, or the floor or even the vehicle seat. Figure 6 also shows the B pillar interior trim 68, the upper surface side of the sill finisher 67, and the lower, substantially vertical surface of the side sill finisher 69, which is intended to cover the edge of the carpet, not shown.

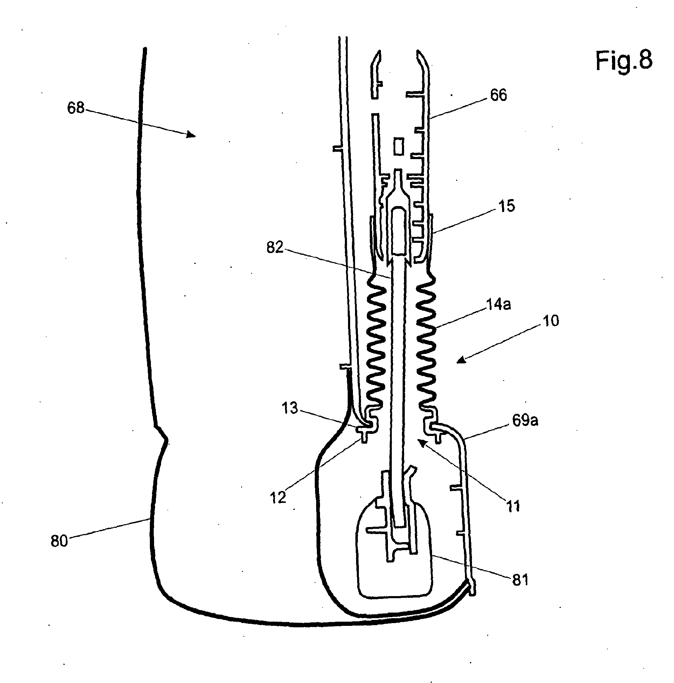

Figure 8 shows a sectional rear view of the present invention *in situ* with the B pillar 68 and side sill 80 of the vehicle illustrated in order to contextualise this example. The view is a section cut through the substantially vertical axis of a buckle tensioning cable 82, which connects the buckle assembly 66 to a pre-tensioner means 81. The pre-tensioner means is secured to the vehicle body. The side sill finisher trim 69a is located into the trim seal 16 which provides a receiving portion of the gaiter 10.

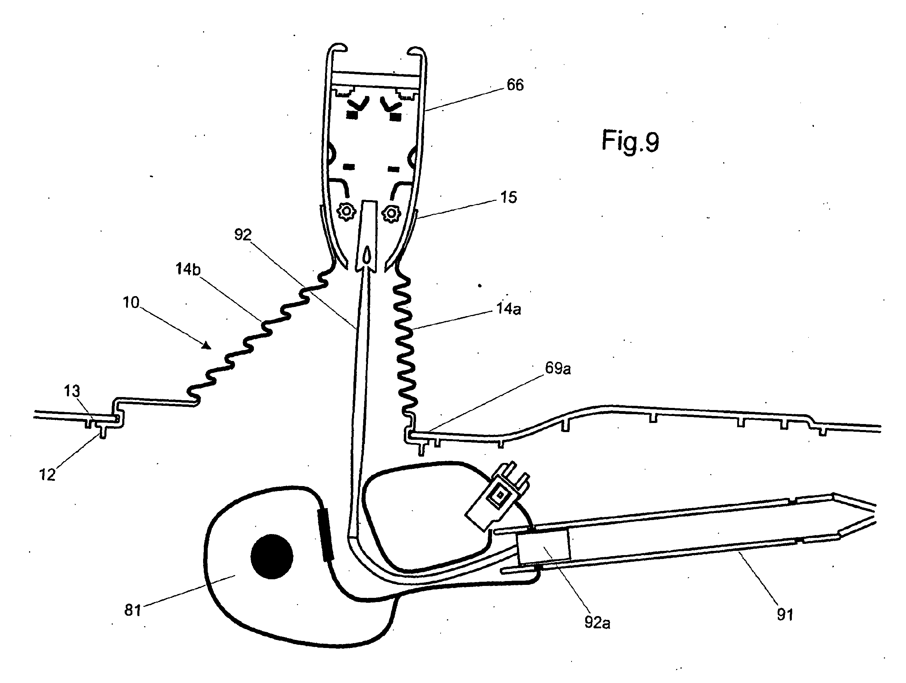

Figure 9 shows a sectional side view of the present invention in its un-deployed state i.e. the pre-tensioner has not been deployed. It will be clear to a person skilled in the art that, if the corresponding vehicle seat is occupied by a person wearing their seatbelt, the buckle orientation is likely to be rotated anti-clockwise as viewed in the figures, as the lap portion of the seatbelt tends to apply a light forward tension to the buckle assembly 66 and tensioning cable 82.

Figure 9 shows a basic representation of a generic seatbelt buckle tensioner that is powered by a gas generating pyrotechnic mechanism. However, it will be clear to one skilled in the art that the present invention is not limited to the use of such a buckle pre-tensioner, and a spring-powered or other such means of applying a suitable tension to the seatbelt buckle may be used in conjunction with the present invention. The pre-tensioner body 81 is secured to the vehicle by suitable means not shown. The tensioner cable 82 secures the buckle assembly 66 to the vehicle via the pre-tensioner, and in particular by means of the tensioner piston 92a. The tensioner piston 92a is reciprocally housed within a guide tube 91. During deployment, the piston 92a is forced along the guide tube 91 by the gas produced by the generator.

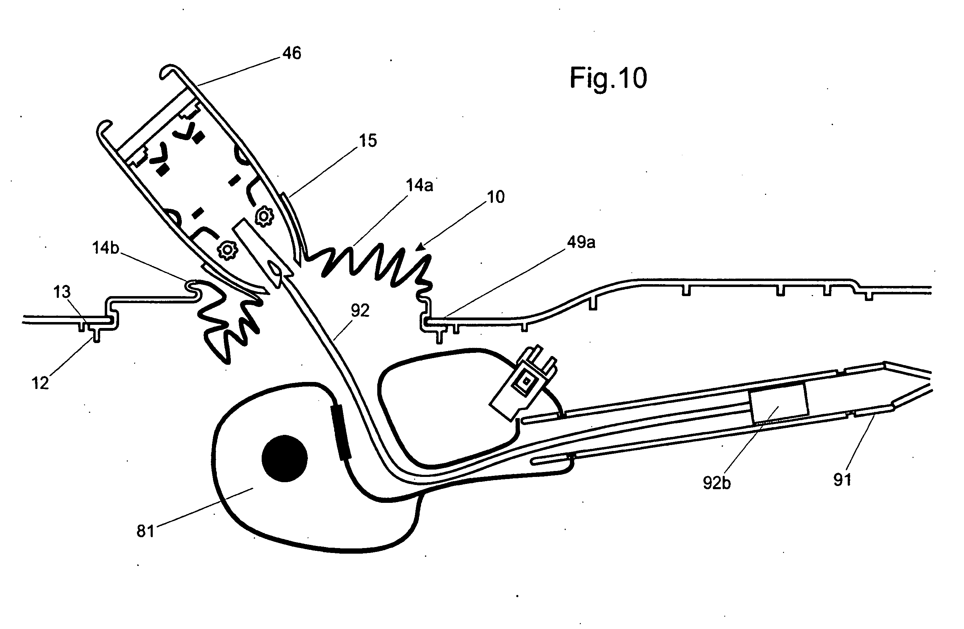

Figure 10 shows a sectional side view of the present invention during deployment. The tensioner piston 92b, reciprocally housed within the guide tube 91, is forced along the guide tube, by the gas produced by the gas generator. As the piston 92b is forced along the guide tube 91, the piston applies a tensioning force to the tensioning cable 82 which pulls the buckle assembly 66 downwards towards the side sill.

As a result of the configuration of the gaiter body portion 14, during deployment the gaiter is at least partially inverted, or turned inside-out by the downward motion of the buckle assembly. The additional stroke length afforded by the configuration of the gaiter body portion 14 allows the system to be tuned to ensure that the response of the restraint system is optimised to mitigate occupant injuries in the event of a vehicle accident.

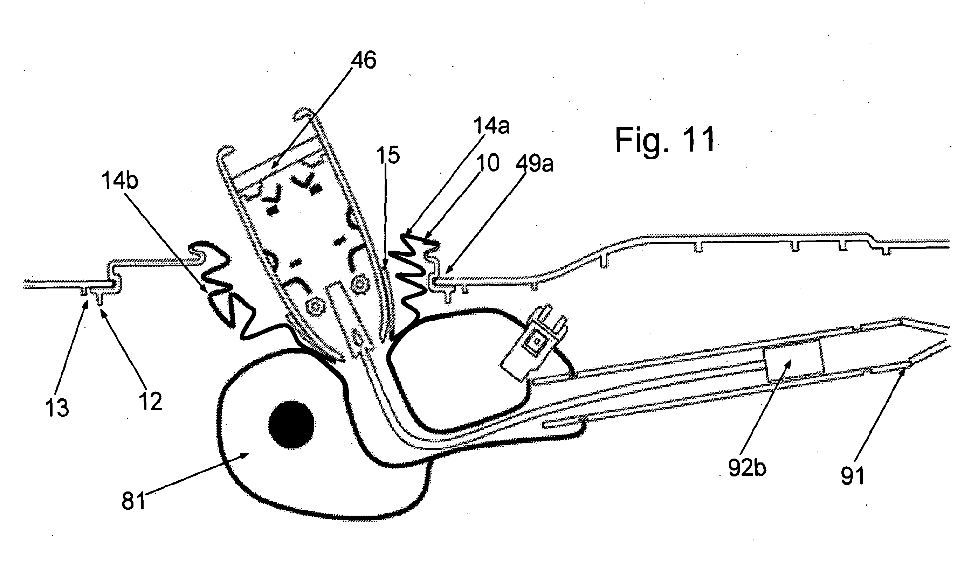

The condition of the gaiter following the deployment of the pre-tensioner is illustrated in Figure 11. The gaiter is at least partially inverted, that is, at least a part of the body portion 14 has passed through the body seal aperture 11. The configuration of the convolutions prevents the 'stack-up' or 'pile-up' of one convolution onto the adjacent convolution. Instead the smaller convolutions, buckle cup aperture 15 and the buckle, are free to be drawn through the larger, body seal aperture 11 at the bottom of the gaiter 10. Permitting the withdrawal of the buckle into the aperture has the advantage that it maximises the stroke of the pre-tensioner system.

## Claims

1. A gaiter (10) for a buckle pre-tensioner, the gaiter comprising:
a body portion (14) configured to enable at least partial inversion of the gaiter during deployment of the buckle pre-tensioner (81); and interfacing
means (15) for engaging with the buckle pre-tensioner (81), in use.

2. The gaiter according to claim 1, wherein the body portion (14) has substantially non-parallel sides.

3. The gaiter according to claim 1 or claim 2, wherein the body portion (14) includes a plurality of convolutions to enable inversion of the gaiter during deployment of the buckle pre-tensioner.

4. The gaiter according to claim 3, wherein the convolutions of the body portion (14) is formed from a material that is sufficiently flexible to enable the inversion of the gaiter during deployment.

5. The gaiter according to any one of claims 2 to 5, wherein the body portion (14) is tapered.

6. The gaiter according to any one of the preceding claims, wherein the body portion has a leading edge (14b) and a trailing edge (14a) and wherein the leading edge has a uniform taper.

7. The gaiter according to claim 6, wherein the leading edge (14b) of the body portion (14) has a curved profile.

8. The gaiter according to claim 7, wherein the curved profile of the leading edge (14b) is concave.

9. The gaiter according to any one of the preceding claims, wherein the interfacing means (15) comprises a cup-shaped aperture.

10. The gaiter according to any one of the preceding claims, wherein the gaiter is for use in a vehicle and wherein the gaiter further comprises means (16) for securing the gaiter to the vehicle.

## Patentansprüche

1. Schutzmanschette (10) für eine Schnallenvorspannvorrichtung, wobei die Schutzmanschette Folgendes umfasst:
einen Körperabschnitt (14), der dazu ausgebildet ist, mindestens die teilweise Umkehrung der Schutzmanschette während des Auslösens der Schnallenvorspannvorrichtung (81) zu ermöglichen; und
ein Verbindungsmittel (15), um in Gebrauch mit der Schnallenvorspannvorrichtung (81) in Eingriff zu treten.

2. Schutzmanschette nach Anspruch 1 , wobei der Körperabschnitt (14) im Wesentlichen nicht parallele Seiten hat.

3. Schutzmanschette nach Anspruch 1 oder Anspruch 2, wobei der Körperabschnitt (14) mehrere Falten umfasst, um die Umkehrung der Schutzmanschette während des Auslösens der Schnallenvorspannvorrichtung zu ermöglichen.

4. Schutzmanschette nach Anspruch 3, wobei die Falten des Körperabschnitts (14) aus einem Material gebildet sind, das ausreichend biegsam ist, um die Umkehrung der Schutzmanschette während des Auslösens zu ermöglichen.

5. Schutzmanschette nach einem der Ansprüche 2 bis 5, wobei der Körperabschnitt (14) verjüngt ist.

6. Schutzmanschette nach einem der vorangehenden Ansprüche, wobei der Körperabschnitt eine Vorderkante (14b) und eine Hinterkante (14a) hat und wobei die Vorderkante eine gleichmäßige Verjüngung hat.

7. Schutzmanschette nach Anspruch 6, wobei die Vorderkante (14b) des Körperabschnitts (14) ein gekrümmtes Profil hat.

8. Schutzmanschette nach Anspruch 7, wobei das gekrümmte Profil der Vorderkante (14b) konkav ist.

9. Schutzmanschette nach einem der vorangehenden Ansprüche, wobei das Verbindungsmittel (15) eine becherförmige Öffnung umfasst.

10. Schutzmanschette nach einem der vorangehenden Ansprüche, wobei die Schutzmanschette für die Verwendung in einem Fahrzeug bestimmt ist und wobei die Schutzmanschette weiter Mittel (16) zum Befestigen der Schutzmanschette am Fahrzeug umfasst.

## Revendications

1. Soufflet (10) pour prétendeur de ceinture de sécurité, le soufflet comprenant :
une partie de corps (14) configurée pour permettre l'inversion au moins partielle du soufflet durant le déploiement du prétendeur de ceinture de sécurité (81) ; et
un moyen d'interfaçage (15) destiné à s'engager avec le prétendeur de ceinture de sécurité (81) durant l'utilisation.

2. Soufflet selon la revendication 1, dans lequel la partie de corps (14) comporte des côtés sensiblement non parallèles.

3. Soufflet selon la revendication 1 ou la revendication 2, dans lequel la partie de corps (14) comporte une pluralité de convolutions pour permettre l'inversion du soufflet durant le déploiement du prétendeur de ceinture de sécurité.

4. Soufflet selon la revendication 3, dans lequel les convolutions de la partie de corps (14) sont formées à partir d'un matériau qui est suffisamment souple pour permettre l'inversion du soufflet durant le déploiement.

5. Soufflet selon l'une quelconque des revendications 2 à 5, dans lequel la partie de corps (14) est conique.

6. Soufflet selon l'une quelconque des revendications précédentes, dans lequel la partie de corps a un bord d'attaque (14b) et un bord de fuite (14a) et dans lequel le bord d'attaque a une conicité uniforme.

7. Soufflet selon la revendication 6, dans lequel le bord d'attaque (14b) de la partie de corps (14) a un profil courbe.

8. Soufflet selon la revendication 7, dans lequel le profil courbe du bord d'attaque (14b) est concave.

9. Soufflet selon l'une quelconque des revendications précédentes, dans lequel le moyen d'interfaçage (15) comprend une ouverture en forme de coupelle.

10. Soufflet selon l'une quelconque des revendications précédentes, le soufflet étant destiné à être utilisé dans un véhicule et le soufflet comprenant en outre un moyen (16) pour fixer le soufflet au véhicule.
